# EUROPÄISCHE PATENTANMELDUNG

(11) **EP 1 238 886 A2**
(43) Veröffentlichungstag der Anmeldung: **11.09.2002**
(21) Anmeldenummer: 01127578.1
(22) Anmeldetag: 19.11.2001
(51) Int. Cl.: B62B 9/10, F21V 7/00

(54) **Fahrgestell mit lichtreflektierender Beschichtung**

(30) Priorität: 09.03.2001 DE 20104128 U
(71) Anmelder: HAUCK GmbH & Co. KG, 96242 Sonnefeld (DE)
(72) Erfinder: Leikeim, Benno, 96242 Sonnefeld (DE)
(74) Vertreter: Popp, Eugen, Dr.

(57) **Zusammenfassung**

Die Erfindung betrifft ein Fahrgestell für einen Kinderwagen, wobei zumindest ein Teil sichtbarer Abschnitte mit einer lichtreflektierenden Beschichtung als integraler Bestandteil der Oberflächenlackierung versehen ist.

## Beschreibung

Die Erfindung betrifft ein Fahrgestell für einen Kinderwagen.

Um die Sichtbarkeit von Gegenständen in der Dunkelheit, insbesondere im Straßenverkehr, zu verbessern, werden häufig selbstklebende, lichtreflektierende Folien verwendet. Diese können auf schnelle und einfache Weise auch an Fahrgestellen für Kinderwagen angebracht und wieder entfernt werden. Somit ist es möglich, ein Fahrgestell eines Kinderwagens nachträglich mit einer lichtreflektierenden Oberfläche zumindest stellenweise zu versehen.

Solche selbstklebenden lichtreflektierenden Folien weisen den Nachteil auf, daß sie auf unebenen oder verschmutzten Oberflächen sehr schlecht haften, weshalb eine vorherige Reinigung der entsprechenden Oberflächenanteile des Fahrgestells notwendig ist.

Der vorliegenden Erfindung liegt daher die Aufgabe zugrunde, ein Fahrgestell für einen Kinderwagen zu schaffen, bei dem sich ein Nachrüsten des Fahrgestells mit lichtreflektierendem Material erübrigt.

Diese Aufgabe wird durch die Merkmale des Anspruchs 1 gelöst, wobei vorteilhafte Details der Erfindung in den Unteransprüchen beschrieben sind.

Das erfindungsgemäße Fahrgestell für einen Kinderwagen zeichnet sich dadurch aus, daß durch den Zusatz von lichtreflektierenden Partikeln in die auf die Oberfläche des Fahrgestells ohnehin aufzubringende Lackierung eine lichtreflektierende Oberfläche gleichzeitig mit dem Lackierungsvorgang erhalten wird. Ein derartiger Lackierungsvorgang kann beispielsweise das Verfahren der Pulverbeschichtung sein. Unter der Pulverbeschichtung versteht man die Beschichtung von Metall- und Kunststoffoberflächen durch Auftragen von wärmehärtenden Pulvern. Diese können im Rotations- oder Flockverfahren, durch Pulverspritzverfahren wie Flammspritzen, Kunststoff-Flammspritzen oder Metallspritzverfahren, im Wirbelsinterbad sowie durch elektrostatische Beschichtung aufgebracht werden. Zur elektrostatischen Beschichtung (EPS) eignen sich besonders duroplastische Pulverlacke aus Epoxid- Polyester- und Acrylharzen. Beim Wirbelsintern finden Thermoplaste aus PA, EVA-Copolymeren, PE, PVC, Polyester und Polyepoxiden, die Beschichtungspulver genannt werden, Anwendung. Die Pulverbeschichtung ermöglicht eine weitgehend automatisierte Arbeitsweise und ist - wegen der Abwesenheit von Lösungsmitteln - umweltfreundlich, weshalb sie daher insbesondere für Geräte und Einrichtungen, wie einem Kinderwagen, die sich in unmittelbarer Nähe zu einem Kind befinden, geeignet sind.

Ein weiterer Arbeitsgang des Umrüstens einer bereits pulverbeschichteten Oberfläche des Fahrgestells auf eine lichtreflektierende pulverbeschichtete Oberfläche erübrigt sich somit. Außerdem ist ein Nachrüsten von Oberflächenanteilen des Fahrgestells mit einer selbstklebenden lichtreflektierenden Folie nicht mehr notwendig.

Die Oberfläche des Fahrgestells kann entweder vollständig oder in Anteilen lichtreflektierend sein, abhängig davon, für welche Bereiche der Oberfläche die lichtreflektierenden Partikel während des Vorgangs der Pulverbeschichtung hinzugegeben werden.

So können beispielsweise sämtliche sichtbaren Abschnitte des Fahrgestells mit der lichtreflektierenden Beschichtung als integraler Bestandteil der Oberflächenlackierung versehen sein. Die nicht sichtbaren Abschnitte hingegen erhalten eine Oberflächenlackierung ohne lichtreflektierende Beschichtung.

Anschließend findet ein Sintervorgang dieser mit oder ohne lichtreflektierenden Partikel versehenen Pulverbeschichtung auf dem Metall bzw. dem Kunststoff des Fahrgestells statt. Alternativ kann auch ein Einbrennvorgang insbesondere bei Verwendung von Einbrennlacken, die sich auf der Basis von Acryl-, Epoxyd-, Phenol-, Melamin-, Harnstoff-, Silikon-, Polyurithan-Harzen usw., die allein oder in Kombinationen bei höherer Temperatur gehärtet werden, zusammensetzen, durchgeführt werden.

Die lichtreflektierenden Partikel können gemäß einer bevorzugten Ausführungsform Glaskugeln, Reflexperlen oder Glasbruch sein. Einige dieser Reflexionskörper werden nach dem Sintern der Pulverbeschichtung aus der damit erhaltenen Lackschicht herausragen und auftreffende Lichtstrahlen, wie beispielsweise von einem Kraftfahrzeug, zurückwerfen. Wird für die Pulverbeschichtung eine lichttransparente Zusammensetzung gewählt, so werden die auftreffenden Lichtstrahlen zusätzlich von den tiefer liegenden lichtreflektierenden Partikeln reflektiert. Somit kann der Reflexionsgrad des Fahrgestells mit der Transparenz der Pulverbeschichtung verändert werden.

Sofern eine dauerhafte feste Einbindung der lichtreflektierenden Partikel in die Oberflächenlackierung des Fahrgestells nicht möglich ist, kann zusätzlich ein Bindemittel zum Binden der lichtreflektierenden Partikel innerhalb der Pulverbeschichtung verwendet werden, welches ebenso mehr oder weniger lichttransparent ausgebildet sein kann.

Vorteilhaft weisen die Reflexperlen und Glaskugeln unterschiedliche Brechungsindizes auf, so daß das einfallende Licht durch die an den Reflexperlen bzw. Glaskugeln stattfindenden unterschiedlich starken Brechungen verschiedenfarbig reflektiert wird. Auf diese Weise kann ein mehr oder weniger buntes Reflexionslichtbild des Fahrgestells bei Lichteinfall wiedergegeben werden.

Denkbar ist auch, daß eine Einfärbung der Oberflächenlackierung durch die lichtreflektierenden Partikel derart stattfindet, daß rötliche Reflexionen im hinteren Bereich des Fahrgestells stattfinden, während das Fahrgestell im vorderen Bereich bei auftreffendem Licht in einer weißen Farbe reflektiert.

Zusätzlich können auch die Räder bzw. die Radfelgen sowie die Seitenflächen des Fahrgestells großflächig mit lichtreflektierenden Beschichtungen versehen sein, um so eine maximale Sicherheit für die eine Straße mit einem Kinderwagen überquerenden Personen zu gewährleisten.

Gemäß einer bevorzugten Ausführungsform werden als lichtreflektierende Partikel Glimmer oder Perlglanzpigmente verwendet, die sich aufgrund ihrer äußeren Struktur leichter in die Pulverbeschichtung einbinden lassen.

In einer weiteren Ausführungsform werden als lichtreflektierende Partikel lumineszierende Pigmente verwendet. Unter lumineszierende Pigmente versteht man hierbei kleinste Festkörper, die nach geeigneter Energiezufuhr in Form von Lichteinfall eine Lichtemission erzeugen, wobei das emittierende Licht in verschiedenen Spektralbereichen, beispielsweise im sichtbaren Bereich, liegen kann.

Eine Art der Lumineszenz ist die Fluoreszenz, die in Form von fluoreszierenden Pigmenten häufig Anwendung auf lichtreflektierenden Teilen einer Sicherheitskleidung für Straßenverkehrsarbeiten findet.

Die gemäß der Erfindung verwendeten lumineszierenden Pigmente können organischer oder anorganischer Natur sein. Beispiele für lumineszenzfähige Pigmente sind Wolframate, Oxide, Silikate, Aluminiate der Erdalkalimetalle der Nebengruppenelemente oder der seltenen Erden sowie der Halogenide der Alkali- oder Erdalkalimetalle, die mit einem oder mehreren Aktivatoren (z.B. Mn²⁺, Sn²⁺, Seltene Erden) dotiert sind. Weitere Beispiele sind fluoreszensfähige Benzol-, Acridin-, Xanthen- und Pyrazolyn-Derivate.

Die lumineszenzfähigen Pigmente können in lumineszenzfähige Fasern zusammengefaßt sein, deren Länge und Dicke in weiten Grenzen variieren kann. Die Länge der Fasern liegt im Bereich von 0,05 mm bis 10 mm und die Dicke der Fasern liegt typischerweise in einem Bereich von 1 µm bis 1000 µm.

Durch das erfindungsgemäße Hinzufügen von lichtreflektierenden Partikeln zu einer Pulverbeschichtung wird, wie oben gezeigt, auf einfache und schnelle Weise ein in der Dunkelheit lichtreflektierendes Fahrgestell für einen Kinderwagen erhalten. Die auf der Oberfläche des Fahrgestells aufgebrachte Pulverbeschichtung kann hierfür nur an den sichtbaren Stellen des Fahrgestells, die nicht von Stoffanteilen, Griffeinrichtungen oder ähnlichem überdeckt werden, mit lichtreflektierenden Partikeln vermischt werden.

Sämtliche in den Anmeldeunterlagen offenbarten Merkmale werden als erfindungswesentlich beansprucht, soweit sie einzeln oder in Kombination gegenüber dem Stand der Technik neu sind.

## Patentansprüche

1. Fahrgestell für einen Kinderwagen,
**dadurch gekennzeichnet, daß**
zumindest ein Teil sichtbarer Abschnitte mit einer lichtreflektierenden Beschichtung als integraler Bestandteil der Oberflächenlackierung versehen ist.

2. Fahrgestell nach Anspruch 1,
**dadurch gekennzeichnet, daß**
die lichtreflektierende Beschichtung lichtreflektierende Partikel, insbesondere Glaskugeln, Pigmente, Reflexperlen, Glimmer und/oder Glasbruch umfaßt.

3. Fahrgestell nach Anspruch 2,
**dadurch gekennzeichnet, daß**
die Pigmente lumineszierende Pigmente sind.

4. Fahrgestell nach Anspruch 3,
**dadurch gekennzeichnet, daß**
die lumineszisierenden Pigmente als fluoreszierende Pigmente ausgebildet sind.

5. Fahrgestell nach Anspruch 2,
**dadurch gekennzeichnet, daß**
die Reflexperlen und/oder die Glaskugeln unterschiedliche Brechnungsindizes aufweisen.

6. Fahrgestell nach einem der vorangegangenen Ansprüche,
**dadurch gekennzeichnet, daß**
die lichtreflektierenden Partikel Teil einer auf der Oberfläche aufgebrachten Pulverbeschichtung sind.
